# EUROPÄISCHE PATENTANMELDUNG

(11) **EP 0 927 858 A2**
(43) Veröffentlichungstag der Anmeldung: **07.07.1999**
(21) Anmeldenummer: 98122346.4
(22) Anmeldetag: 25.11.1998
(51) Int. Cl.: F24J 2/48, F24J 2/04

(54) **Wärmevorrichtung mit als Wärmeenergieabsorber wirkenden Rohren für Energieträgerflüssigkeit**

(30) Priorität: 29.12.1997 DE 29722707 U; 18.06.1998 DE 29810894 U
(71) Anmelder: Betonbau GmbH, D-68753 Waghäusel (DE)
(72) Erfinder: Primus, Illo-Frank Dr.-Ing., 76327 Pfinztal (DE); Grube, Horst Dr.-Ing., 40883 Ratingen (DE); Kaute, Christoph Dipl.-Ing., 76344 Leopoldshafen (DE); Gühr, Eberhard Dipl.-Ing. (FH), 76829 Landau (DE)
(74) Vertreter: Hiebsch, Gerhard F., Dipl.-Ing.

(57) **Zusammenfassung**

Bei einer Vorrichtung mit Formteilen, in die als Wärmeenergieabsorber wirkende Rohre für Energieträgerflüssigkeit eingebettet sind, ist ein Rohrsystem mit zwei in Abstand parallelen Sammelrohren und diese strömungstechnisch verbindenden sowie sprossenartig angeordneten Registerrohren mit einem mineralische Zuschlagstoffe und Bindemittel enthaltenden, nach Verformung erstarrbaren Werkstoff ummantelt; die Registerrohre enthaltende Stäbe (34) aus diesem Werkstoff sind in Abstand (q) zueinander monolithisch mit einem Sockelprofil (38) sowie einem Kopfprofil (40) verbunden. Sockelprofil (38) und Kopfprofil (40) sollen je eines der Sammelrohre des Rohrsystems enthalten. Zudem sind die Registerrohre mit Beton ummantelt, gegebenenfalls die Betonstäbe (34) aus mit Fasern, insbesondere Polymer- oder Glasfasern, versetztem Beton geformt.

## Beschreibung

Die Erfindung betrifft eine Vorrichtung mit Formteilen, in die als Wärmeenergieabsorber wirkende Rohre für Energieträgerflüssigkeit eingebettet sind.

Die EP 0 442 432 A1 der Arimelderin beschreibt ein Bauwerk mit plattenartigen Betonfertigteilen, in die als Wärmeenergieabsorber wirkende Rohre für eine Energieträgerflüssigkeit eingebettet und gegebenenfalls miteinander verbunden sind. Dieses Bauwerk besteht aus mehreren gesonderten, die Rohrschlange/n enthaltenden Platten, die radial an einer Mittelachse zu einer säulenartigen Konstruktion zusammengesetzt sind, zumindest teilweise in Abstand zueinander verlaufen sowie mit etwa einem Drittel ihrer Wärmeentzugsfläche unterirdisch angeordnet sein können. Die Höhe solcher sog. Energiesterne über Erdreich mißt etwa vier Meter und kann u.a. für die monovalente Heizung eines Einfamilienhauses herangezogen werden.

Dem Stande der Technik können auch Mauerwerke entnommen werden, in welche parallel geschaltete Rohrschlangen eingebettet sind, welche einen Verdampferkreislauf einer ersten Wärmepumpe bilden. Zwischen diesen Rohrschlangen sind weitere Rohrschlangen eines Kondensatorkreislaufes der ersten Wärmestufe vorgesehen. Ein Speicherbehälter bildet den Verdampfungskreislauf einer zweiten Wärmepumpe, deren Kondensatorkreislauf sodann als Wärmequelle dient. Diese Anordnung verschiedener Stufen von Wärmepumpen hat sich in der Praxis aufgrund des komplizierten Aufbaues nicht durchgesetzt, weshalb sich der Erfinder die Aufgabe gestellt hat, eine Vorrichtung der eingangs erwähnten Art so zu verbessern, dass sie ohne weiteres als Abgrenzungselemente für Grundstücke, Terrassen od.dgl. auf einfache Weise verwendet werden kann.

Zur Lösung dieser Aufgabe führt die Lehre des unabhängigen Anspruches, die Unteransprüche geben günstige Weiterbildungen an.

Erfindungsgemäß wird ein Rohrsystem mit zwei in Abstand parallelen Sammelrohren und diese strömungstechnisch verbindenden sowie sprossenartig angeordneten Registerrohren mit einem -- mineralische Zuschlagstoffe und Bindemittel enthaltenden -- nach dem Verformen erstarrenden Werkstoff so ummantelt, dass die Registerrohre enthaltende Werkstoffstäbe in Abstand zueinander monolithisch mit einem Sockelprofil sowie einem Kopfprofil verbunden sind; der bevorzugte Werkstoff ist Beton, insbesondere ein mit Fasern -- wie Polymer- oder Glasfasern -- versetzter Beton - letztere verhindern eine mögliche Rißbildung innerhalb des Betongebildes.

Erfindungsgemäß soll ein Optimum zwischen den leitenden und energieaufnehmenden Rohroberflächen sowie den Werkstoff- oder Betonboberflächen einerseits und dem Werkstoff-Speichervermögen anderseits erzielt werden. Die vom Betonmantel aus der Umgebung aufgenommene Energie wird durch die Energieträgerflüssigkeit in üblicher Weise einer Energietauscheinrichtung zugeleitet und von dieser zur Heizung von Räumen od. dgl. abgegeben.

Nach einem weiteren Merkmal der Erfindung enthalten sowohl das Sockelprofil als auch das Kopfprofil der Vorrichtung eines der die Registerrohre strömungstechnisch verbindenden Sammelrohre.

Dank dieser Maßgaben entsteht ein Massivabsorber-Bauteil, welches beispielsweise als Terrassenbrüstung eingesetzt werden kann und dann die übliche Höhe von etwa 1.000 mm anbietet. Wird ein solches Element beispielsweise als Umfriedungsmauer eingesetzt, besteht die Möglichkeit, die Bauwerkshöhe bis etwa zu 300 cm zu wählen.

Als günstig hat es sich zudem erwiesen, den Abstand der Betonstäbe voneinander etwa deren Breite anzupassen, die bevorzugt dem vierfachen bis sechsfachen Durchmesser des Registerrohres entspricht. Dies führt zu einer optimalen Konfiguration der absorbierungsfähigen Betonmantelteile sowie der von diesen begrenzten Durchgangsspalte.

Günstig sind Betonstäbe polygonen -- vorteilhafterweise sechseckigen -- Querschnitts, wobei sich der Querschnitt des Betonstabes -- und/oder des Kopfprofils -- zu einer Frontseite hin konisch verjüngt; die Seitenwände des Betonstabes bzw. des Kopfprofils begrenzen mit der Querschnittsachse einen Winkel.

So entstehen zwischen den Betonstäben Durchgangsöffnungen mit sich zur Frontfläche der Vorrichtung hin erweiterndem Querschnitt, welcher die Luftströmung zu begünstigen vermag. Aus gleichen Gründen ist die zum Kopfprofil gerichtete Oberfläche des Sockelprofils zur Frontseite hin abwärts geneigt und liegt der aufwärts geneigten Unterfläche des Kopfprofils gegenüber. Der bevorzugte Neigungswinkel dieser Flächen mißt etwa 15°.

Möglich sind auch Betonstäbe scheibenartigen oder kreisförmigen Querschnitts, dessen Durchmesser bevorzugt etwa 120 mm bis 150 mm mißt. Die Zwischenräume oder Spalte öffnen sich dann beidseits der gemeinsamen Durchmesserlinie und werden querschnittlich von Viertelkreiskonturen begrenzt; dies begünstigt die Strömungsverhältnisse für die durch den Spalt ziehende Luft.

Im Rahmen der Erfindung liegt als Maß der Dicke der das Sammelrohr oder das Registerrohr umgebenden Betonummantelung etwa das 1-fache bis 2-fache des Durchmessers des im Beton eingebetteten Rohres, insbesondere zwischen 35 und 50 mm.

Ein vorteilhafter Durchmesser der Sammelrohre liegt bei etwa 50 mm und der Registerrohre bei etwa 20 mm. Zudem soll der Abstand zwischen den Registerrohren des Rohrsystems etwa 200 mm betragen und der Abstand der parallelen Sammelrohre zwischen 900 und 3.000 mm liegen. Deren bevorzugte --das Bauteil bestimmende -- Länge mißt zwischen 2000 mm und 6000 mm.

Als günstig erwiesen hat sich ein Rohrsystem aus Stahl --insbesondere aus Edelstahl -- vor allem wegen seiner Armierungsfunktion. Jedoch werden auch Rohrsysteme aus -- bevorzugt schweißbarem -- Kunststoff eingesetzt, die besonders einfach zusammenzufügen sind.

Erfindungsgemäß sollen mehrere betonummantelte Rohrsysteme zu einem Gesamtsystem gekoppelt werden können und als Absorber-Anlage die Wärmequelle einer Wärmepumpen-Heizanlage bilden. Zur Ergänzung können zudem mehrere der gekoppelten betonummantelten Rohrsysteme mit einem Erdreich-Absorber verbunden sein, beispielsweise mit einem Grabenkollektor, einer oder mehrerer Erdsonden, Erdkollektoren od.dgl.

Mit den erörterten Maßnahmen entsteht ein filigranes monolithisches Fertigelement mit hoher Energie aufnehmender Gesamtoberfläche, das als Absorber und gleichzeitig als Zaunelement, Brüstungselement oder Fassadenelement eingesetzt zu werden vermag.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: eine Seitenansicht eines Rohrsystems für ein Massivabsorberelement;
- Fig. 2:: die Seitenansicht einer Anlage mit drei zu einer Anlage verbundenen Rohrsystemen nach Fig. 1;
- Fig. 3:: eine Seitenansicht von mit dem Rohrsystem der Fig. 1, 2 hergestellten Massivabsorberelementen;
- Fig. 4:: die Draufsicht auf Fig. 3;
- Fig. 5:: einen vergrößerten Ausschnitt aus Fig. 3;
- Fig. 6:: den Schnitt durch Fig. 5 nach deren Linie VI-VI;
- Fig. 7:: eine Stirnansicht zu Fig. 5.

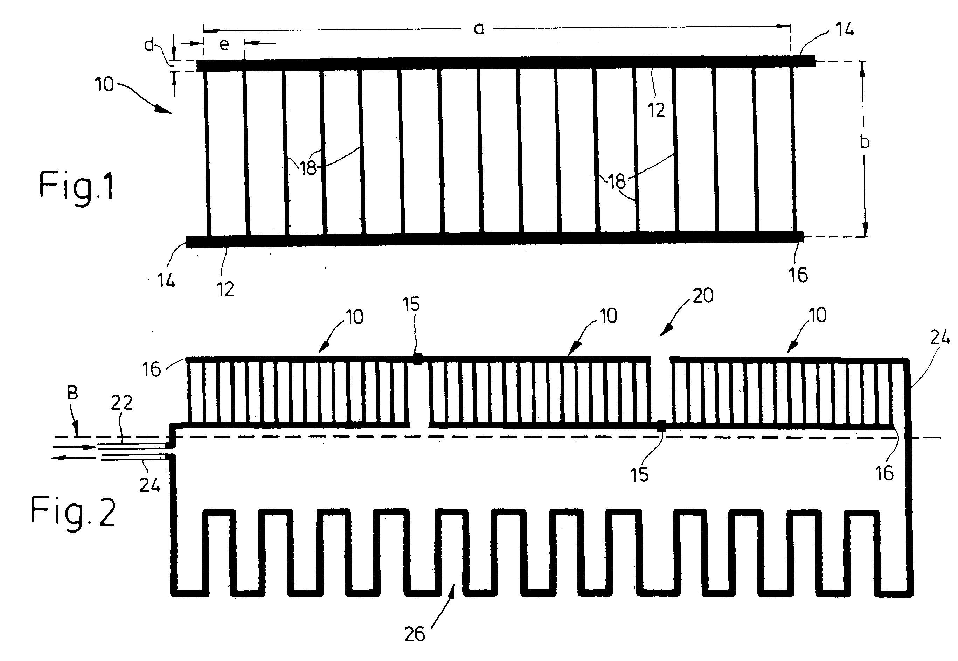

Ein Rohrsystem 10 nach Fig. 1 einer beispielsweisen Länge a von 3.000 mm weist in einem mittleren Abstand b von hier etwa 900 mm übereinander zwei -- aus schweißbarem Kunststoff geformte -- parallele Sammelrohre 12 eines Durchmessers d von etwa 50 mm auf, die jeweils einends mit einer Verbindungsmuffe 14 sowie andernends mit einem Blindstopfen 16 versehen sind. Die beiden Sammelrohre 12 sind durch --in einem mittleren Abstand b von 200 mm parallele -- Registerrohre 18 eines Durchmessers von etwa 20 mm bis 25 mm verbunden.

Statt der beschriebenen HD-PE-Sammelrohre 12 können solche aus Stahl eingesetzt werden, die anstelle jener Verbindungsmuffe 14 ein Gewinde zum Anmuffen eines zweiten Rohrsystems 10 od. dgl. mittels eines Muffenringes 15 anbieten; derartige Muffenringe 15 läßt Fig. 2 an einer Galerie 20 aus drei aneinandergefügten Rohrsystemen 10 erkennen. Das in Fig. 2 linke Rohrsystem 10 ist an den Vorlauf 22 einer ansonsten nicht wiedergegebenen Wärmepumpen-Heizanlage angeschlossen, das andere Ende der Galerie 20 an den entsprechenden Rücklauf 24, der unterhalb der Galerie 20 sowie einer Rasensohle B mäanderartig als erdgekoppelter Absorber oder Grabenkollektor 26 ausgebildet ist.

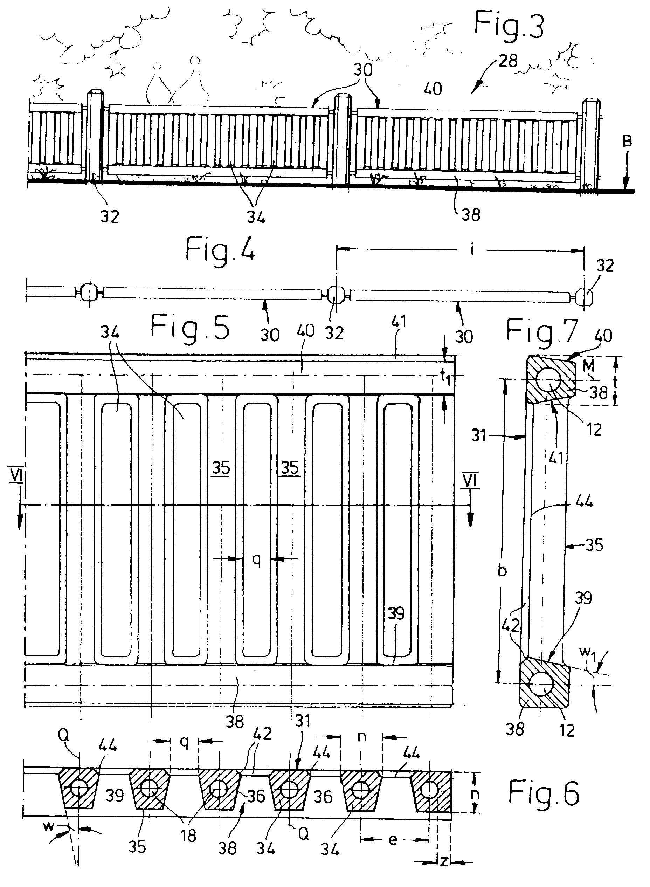

Das Rohrsystem 10 wird mit Beton ummantelt, so dass beispielsweise gemäß Fig. 3 ein filigranes und monolithisches Fertigelement 30 in Form einer Freilandbrüstung entsteht; jeweils ein Rohrsystem 10 enthaltende Brüstungselemente 30 sind zwischen Vertikalpfosten 32 vorgesehen, deren Abstände i voneinander etwa 3.500 mm messen.

Jedes der Registerrohre 18 bildet innerhalb des Brüstungselementes 30 den armierenden Kern eines Betonstabes 34 polygonen Querschnittes, dessen größte Breite n hier 120 mm bei einem lichten Abstand q von 80 mm zwischen den Betonstäben 34 beträgt. Die Dicke z des um das Registerrohr 18 entstehenden Betonmantels beträgt das 1-fache bis 2-fache des Registerrohrdurchmessers. Nicht dargestellt ist eine Ausführung mit Betonstäben kreisförmigen Querschnitts eines beispielsweisen Durchmessers von 120 mm bis 150 mm; auch ein solcher Kreisquerschnitt ist infolge der sich beidseits von dem gemeinsamen Durchmesser der Betonstäbe weg jeweils mittels einer Viertelkreiskontur erweiternden Form des --von zwei der Betonstäbe begrenzten -- Zwischenraumes oder Spalt strömungstechnisch günstig.

Die Betonstäbe 34 sind mit einem Sockelprofil 38 und einem Kopfprofil 40 einstückig gegossen; nach Fig. 6 verjüngt sich der Betonstab 34 von seiner nahe der Elementrückseite 31 vorhandenen größten Breite n zu seiner Frontfläche 35 hin unter Bildung eines Winkels w von etwa 15° seiner Seitenflächen 36 mit der Querschnittsachse Q. Gemäß Fig. 7 verjüngt sich auch das Kopfprofil 40 von einer größten Höhe t (140 mm) zu einer Höhe t₁ von 90 mm nahe der Frontseite 35 hin beidseits einer horizontalen Querschnittsmittelachse M. Die aufwärts gerichtete Oberfläche 39 des Sockelprofils 38 ist entsprechend der gegenüberliegenden Längsfläche 41 des Kopfprofils 40 -- dazu gegenläufig -- geneigt, wobei der Neigungswinkel w₁ auch hier etwa 15° mißt. Nahe der Rückseite 31 des Brüstungselementes 30 sind sowohl dessen Betonstäbe 34 als auch das Sockel- und das Kopfprofil 36 bzw. 38 bei 42 -- unter Bildung von Kanten 44 -- angefast.

## Patentansprüche

1. Vorrichtung mit Formteilen, in die als Wärmeenergieabsorber wirkende Rohre für Energieträgerflüssigkeit eingebettet sind,
dadurch gekennzeichnet,
dass ein Rohrsystem (10) mit zwei in Abstand (b) parallelen Sammelrohren (12) und diese strömungstechnisch verbindenden sowie sprossenartig angeordneten Registerrohren (18) mit einem mineralische Zuschlagstoffe und Bindemittel enthaltenden, nach Verformung erstarrbaren Werkstoff ummantelt sind, wobei die Registerrohre enthaltende Stäbe (34) aus diesem Werkstoff in Abstand (q) zueinander monolithisch mit einem Sockelprofil (38) sowie einem Kopfprofil (40) verbunden sind.

2. Vorrichtung nach Anspruch 1, dadurch gekennzeichnet, dass Sockelprofil (38) und Kopfprofil (40) je eines der Sammelrohre (12) des Rohrsystems (10) enthalten.

3. Vorrichtung nach Anspruch 1 oder 2, dadurch gekennzeichnet, dass die Registerrohre (18) mit Beton ummantelt sind, wobei gegebenenfalls die Betonstäbe (34) aus mit Fasern, insbesondere Polymer- oder Glasfasern, versetztem Beton geformt sind.

4. Vorrichtung nach einem der Ansprüche 1 bis 3, dadurch gekennzeichnet, dass der Abstand (q) der Werkstoff- oder Betonstäbe (34) voneinander etwa deren Breite (n) entspricht, und/oder dass die größte Breite (n) des Werkstoff- oder Betonstabes (34) etwa dem vierfachen bis sechsfachen Durchmesser des Registerrohres (18) entspricht.

5. Vorrichtung nach einem der Ansprüche 1 bis 4, dadurch gekennzeichnet, dass der Querschnitt des Werkstoff- oder Betonstabes (34) polygon ausgebildet, bevorzugt sechseckig, ist.

6. Vorrichtung nach einem der Ansprüche 1 bis 5, dadurch gekennzeichnet, dass sich der Querschnitt des Werkstoff- oder Betonstabes (34) und/oder des Kopfprofils (40) zu einer Frontseite (35) hin konisch verjüngt, wobei die Seitenwände (36 bzw. 41) des Werkstoff- oder Betonstabes bzw. des Kopfprofils mit der Querschnittsachse (Q bzw. M) einen Winkel (w, w₁) begrenzen, gegebenenfalls einen Neigungswinkel (w, w₁) von etwa 15°.

7. Vorrichtung nach einem der Ansprüche 1 bis 6, dadurch gekennzeichnet, dass von den Werkstoff- oder Betonstäben (34) begrenzte Durchgangsöffnungen oder Spalte einen sich zur Frontseite (35) konisch erweiternden Querschnitt aufweisen.

8. Vorrichtung nach einem der Ansprüche 1 bis 4, gekennzeichnet durch Betonstäbe etwa kreisförmigen Umfangsquerschnittes, wobei der Durchmesser des kreisförmigen Querschnittes bevorzugt etwa 120 mm bis 150 mm und/oder von den Betonstäben begrenzte Durchgangsöffnungen oder Spalte einen sich beidseits einer gemeinsamen Durchmesserlinie der Betonstäbe sich erweiternden Querschnitt aufweisen.

9. Vorrichtung nach einem der Ansprüche 1 bis 8, dadurch gekennzeichnet, dass die zum Kopfprofil (40) gerichtete Oberfläche (39) des Sockelprofils (38) zur Frontseite (35) hin abwärts geneigt ist, gegebenenfalls in einem Neigungswinkel (w, w₁) von etwa 15°.

10. Vorrichtung nach wenigstens einem der Ansprüche 1 bis 9, dadurch gekennzeichnet, dass die Dicke (z) der das Sammelrohr (12) oder das Registerrohr (18) umgebenden Betonummantelung etwa dem 1-fachen bis 2-fachen des Rohrdurchmessers entspricht.

11. Vorrichtung nach einem der Ansprüche 1 bis 10, gekennzeichnet durch einen Durchmesser (d) der Sammelrohre (12) von etwa 50 mm und/oder der Registerrohre (18) von etwa 20 mm bis 25 mm, wobei gegebenenfalls die Länge der Sammelrohre (12) zwischen 2000 mm und 6000 mm, bevorzugt von etwa 3000 mm, beträgt.

12. Vorrichtung nach einem der Ansprüche 1 bis 11, dadurch gekennzeichnet, dass der Abstand (e) der Registerrohre (18) des Rohrsystems (10) etwa 200 mm beträgt und/oder der Abstand (b) der parallelen Sammelrohre (12) zwischen 900 und 3.000 mm liegt.

13. Vorrichtung nach wenigstens einem der Ansprüche 1 bis 12, dadurch gekennzeichnet, dass das Rohrsystem (10) aus Stahl, insbesondere aus Edelstahl, hergestellt ist oder, dass das Rohrsystem (10) aus bevorzugt schweißbarem Kunststoff geformt ist.

14. Vorrichtung nach wenigstens einem der Ansprüche 1 bis 12, dadurch gekennzeichnet, dass das Sammelrohr (12) jeweils einseitig geschlossen bzw. durch einen Blindstopfen (16) versperrt ist sowie auf der anderen Seite ein Anschlussstück (14, 15) zum Anschließen an ein weiteres Rohrsystem (10) enthält.

15. Vorrichtung nach wenigstens einem der Ansprüche 1 bis 22, dadurch gekennzeichnet, dass mehrere betonummantelte Rohrsysteme (10) zu einem Gesamtsystem gekoppelt sind und als Absorber-Anlage die Wärmequelle einer Wärmepumpen-Heizanlage bilden, wobei gegebenenfalls mehrere gekoppelte und betonummantelte Rohrsysteme (10) mit einem Erdreich-Absorber, bevorzugt mit einem Grabenkollektor (26), gekoppelt sind.

16. Vorrichtung nach einem der Ansprüche 1 bis 15, dadurch gekennzeichnet, dass sie mit Befestigungsmitteln als Aufhänge- oder Befestigungspunkte für die Betonfertigteile versehen ist, die mit Beton ummantelt sind.
